# EUROPEAN PATENT APPLICATION

(11) **EP 3 135 906 A1**
(43) Date of publication of application: **01.03.2017**
(21) Application number: 15783571.1
(22) Date of filing: 23.04.2015
(51) Int. Cl.: F03G 5/00, H02K 7/00, F16H 37/02

(54) **SELF-POWER GENERATING APPARATUS**

(30) Priority: 25.04.2014 KR 20140049967
(71) Applicant: Naschem Co., Ltd., Incheon 404-825 (KR)
(72) Inventor: SON, Dae-up, Incheon 404-170 (KR)
(74) Representative: Gulde & Partner
(86) International application number: PCT/KR2015/004039
(87) International publication number: WO 2015/163700

(57) **Abstract**

The present invention relates to a self-power generating apparatus that can generate power by converting an external force that alternately acts in a forward and reverse direction into a unidirectional force, and can generate power by winding a wire around a pulley axially coupled to a drive shaft and applying, by a user, an external force to the wire with his/her hands to rotate the pulley in a forward and reverse direction, thereby enhancing power generation efficiency. To this end, the self-power generating apparatus comprises: a drive shaft alternately rotated by an external force in a forward and reverse direction; a forward power transmission part that transmits only the forward rotating force of the drive shaft to a power generating shaft; a reverse power transmission part that transmits only the reverse rotating force of the drive shaft to the power generating shaft; and a power generator that generates power using a unidirectional rotating force of the power generating shaft.

## Description

### [Technical Field]

The present invention relates to a self-power generating apparatus, and more particularly to a self-power generating apparatus capable of generating power by converting external forces alternately applied in forward and reverse directions into a one-direction force, and capable of generating power as a user winds a wire around a pulley coupled to a driving shaft and applies an external force to the wire with both hands of the user to rotate the pulley in a forward or reverse direction, thereby enhancing power generation efficiency.

### [Background Art]

In general, although electricity has been used as a main energy source in an industrial society, recently, investment and development have been rapidly performed with respect to various alternative power generating facilities for solar power generation, wind power generation, and tidal power generation due to the depletion of fossil energy.

Meanwhile, electricity is produced by the power generation facilities and supplied to home or industrial devices or products through a power cable for the use as an energy source. However, most products, such as small-size home appliances or household items, requiring portability or activity have batteries such as a primary or secondary cell serving as a power source.

However, since the battery has a limitation in use time, if power is fully discharged from the battery, the battery must be charged with power for the re-use thereof. However, when a user is moving or is outdoors, the battery may not be charged with power.

In order to solve the problems, recently, various self-power generating apparatuses have been developed, so that required power may be charged in the battery for the use even in an emergency situation. In particular, as health attracts attention, a self-power generating apparatus has been developed to generate power when a user plays various sports, enjoys various leisure activities, or uses various sports goods.

However, as the self-power generating apparatus using a treadmill, a Lat Pull Down, or a pendulum according to the related art is fixedly installed in one place, portability is degraded, so that the user may not carry the equipment. Accordingly, power cannot be generated if necessary.

In addition, although the self-power generating apparatus according to the related art is configured with portability, power generation efficiency is weak, so that power is generated in small amount. Accordingly, the self-power generating apparatus according to the related art has a difficulty in generating power in amount required by the user.

As a prior art, there is Korean Unexamined Patent Publication No. 10-2013-0068347 (published on June 26, 2013).

### [Disclosure]

### [Technical Problem]

In order to solve the problem occurring in the related art, an object of the present invention is to provide a self-power generating apparatus capable of generating power by converting external forces alternately applied in forward and reverse directions into a one-direction force, and of generating power as a user winds a wire around a pulley shaft-coupled to a driving shaft and applies an external force to the wire with both hands of the user to rotate the pulley in a forward or reverse direction, thereby enhancing power generation efficiency.

### [Technical Solution]

In order to accomplish the object of the present invention, there is provided a self-power generating apparatus including a driving shaft alternately rotated in a forward direction or a reverse direction by an external force, a forward power transmission unit to transmit only a forward rotational force of the driving shaft to a power generating shaft, a reverse power transmission unit to transmit only a reverse rotation force of the driving shaft to the power generating shaft, and a power generator to generate power using a one-direction rotational force of the power generating shaft.

Preferably, a pulley may be coupled to the driving shaft, and the driving shaft may be alternately rotated in the forward direction or the reverse direction as a wire wound around the pulley of the driving shaft alternately reciprocates.

Preferably, the pulley may be coupled to a center of the driving shaft.

Preferably, the self-power generating apparatus may further include a cooperation shaft that is mounted perpendicularly to the driving shaft, has one end coupled to a first bevel gear, and is coupled to a pulley. A second bevel gear engaged with the first bevel gear may be coupled to one end of the driving shaft, and the cooperation shaft may be alternately rotated in the forward direction or the reverse direction as a wire wound around the pulley of the cooperation shaft alternately reciprocates, such that the driving shaft is alternately rotated in the forward direction or the reverse direction.

Preferably, one or both of the forward power transmission unit and the reverse power transmission unit may include a clutch driving part to transmit only one-direction power of the driving shaft, and a driven part to transmit power of the clutch driving part to the power generating shaft. The clutch driving part may include a first disc-shaped body, into which one of the driving shaft and the power generating shaft is inserted, such that the first disc-shaped body is rotatable relatively to the inserted shaft, a first spur gear formed on an outer circumferential surface of the first disc-shaped body, a first circular step difference groove coaxially formed in one surface of the first disc-shaped body, a first latch gear formed in one direction on an inner circumferential surface of the first circular step difference groove to transmit only one-direction rotation movement, and a first latch coupled to the shaft inserted into the first disc-shaped body to be engaged with the first latch gear. The driven part may include a second spur gear coupled to a remaining one of the driving shaft and the power generating shaft and engaged with the first spur gear, the first latch gear and the first latch may be formed to transmit a driving force only in the forward direction when applied to the forward power transmission unit, and the first latch gear and the first latch may be formed to transmit the driving force only in the reverse direction when applied to the reverse power transmission unit.

Preferably, one or both of the forward power transmission unit and the reverse power transmission unit may include a clutch driving part to transmit only one-direction power of the driving shaft, and a driven part to transmit power of the clutch driving part to the power generating shaft through a belt. The clutch driving part may include a third disc-shaped body, into which one of the driving shaft and the power generating shaft is inserted, such that the third disc-shaped body is rotatable relatively to the inserted shaft, a third circular step difference groove coaxially formed in one surface of the third disc-shaped body, a third latch gear formed on an inner circumferential surface of the third circular step difference groove, and a third latch coupled to the shaft inserted into the third disc-shaped body to be engaged with the third latch gear. The driven part may include a fourth disc-shaped body coupled to a remaining one of the driving shaft and the power generating shaft and linked with the third disc-shaped body through the belt. The third latch gear and the third latch may be formed to transmit a driving force only in the forward direction when applied to the forward power transmission unit, and the third latch gear and the third latch may be formed to transmit the driving force only in the reverse direction when applied to the reverse power transmission unit.

Preferably, the self-power generating apparatus may further include at least one flywheel coupled to the power generating shaft.

Preferably, the self-power generating apparatus may further include a rechargeable battery to store electrical energy generated from the power generator.

Preferably, the self-power generating apparatus may further include a housing that rotatably supports both ends of the driving shaft and both ends of the power generating shaft and has the power generator therein.

Preferably, a pulley may be coupled to the driving shaft, and the driving shaft and the power generating shaft may be arranged in parallel to each other.

### [Advantageous Effects]

As described above, according to the present invention, the power can be generated by converting the external force, which is alternately applied in the forward and reverse directions, into a one-direction force.

In addition, a user winds the wire around the pulley coupled to the driving shaft and applies the external force to the wire with both hands to rotate the pulley in the forward and reverse directions so that the power can be generated. Accordingly, the power can be efficiently generated. Therefore, the self-power generation can be achieved together with various types of workouts.

In addition, the flywheel is provided, so that the power generation efficiency can be more enhanced.

Further, the rechargeable battery is provided to store the electrical energy generated from the power generator, so that the user can use the electrical energy if necessary.

In addition, as the pulley is located at the center of the housing to form the symmetrical structure, the apparatus can generate power without the excessive vibration when the user applies the external force.

In addition, the power can generated in the state that the apparatus is mounted on a fixed position, such as a tree, using the tow ring provided at one point of the housing.

### [Description of Drawings]

FIG. 1 is a perspective view showing a self-power generating apparatus according to one embodiment of the present invention.
FIG. 2 is a perspective view showing an inner part of the self-power generating apparatus according to one embodiment of the present invention.
FIG. 3 is an exploded perspective view showing the self-power generating apparatus according to one embodiment of the present invention.
FIG. 4 is an enlarged perspective view showing a rotation unit of a forward power transmission unit of the self-power generating apparatus according to one embodiment of the present invention.
FIG. 5 is an enlarged perspective view showing a rotation unit of a reverse power transmission unit of the self-power generating apparatus according to one embodiment of the present invention.
FIG. 6 is a perspective view showing a self-power generating apparatus according to another embodiment of the present invention.
FIG. 7 is a perspective view showing an inner part of the self-power generating apparatus according to another embodiment of the present invention.
FIG. 8 is a front view showing the inner part of the self-power generating apparatus according to another embodiment of the present invention.
FIG. 9 is a view showing that the self-power generating apparatus according to another embodiment of the present invention is mounted on a tree.
FIG. 10 is a photograph showing that a user works out while generating power using the self-power generating apparatus according to another embodiment of the present invention.

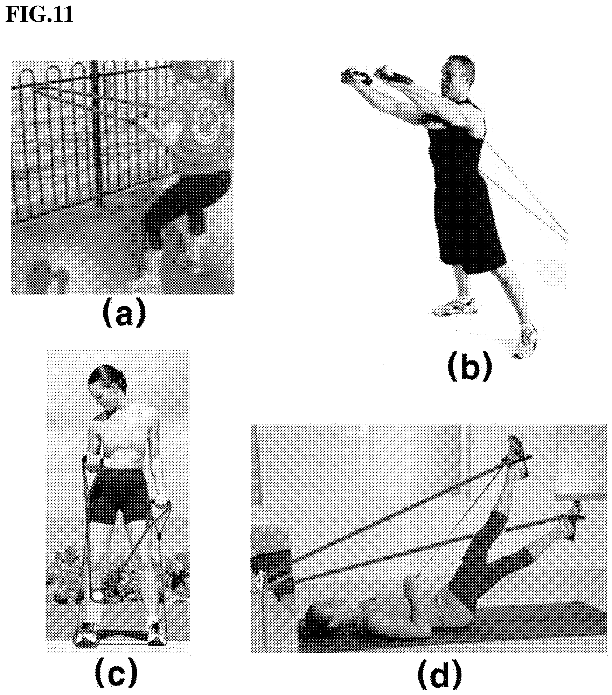

FIG. 11 is a photograph showing that users variously work out while generating power using the self-power generating apparatus according to another embodiment of the present invention.

### [Best Mode]

### [Mode for Invention]

Various embodiments are possible without departing from the technical spirit or main features of the present invention. Accordingly, the embodiments are provided only for the illustrative purpose, and the present invention should not be interpreted as being limited thereto.

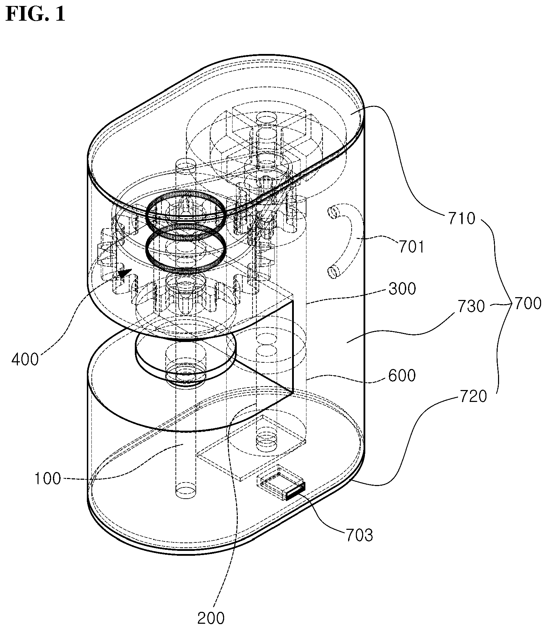

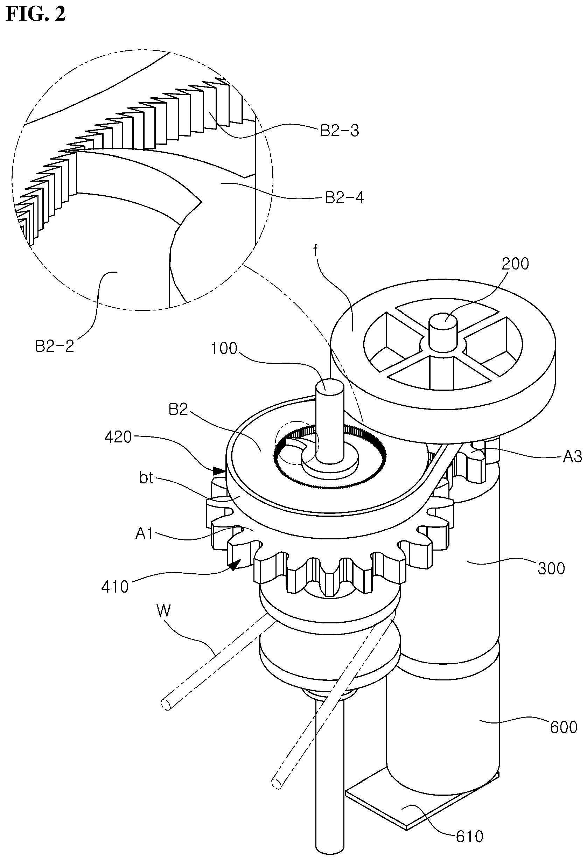

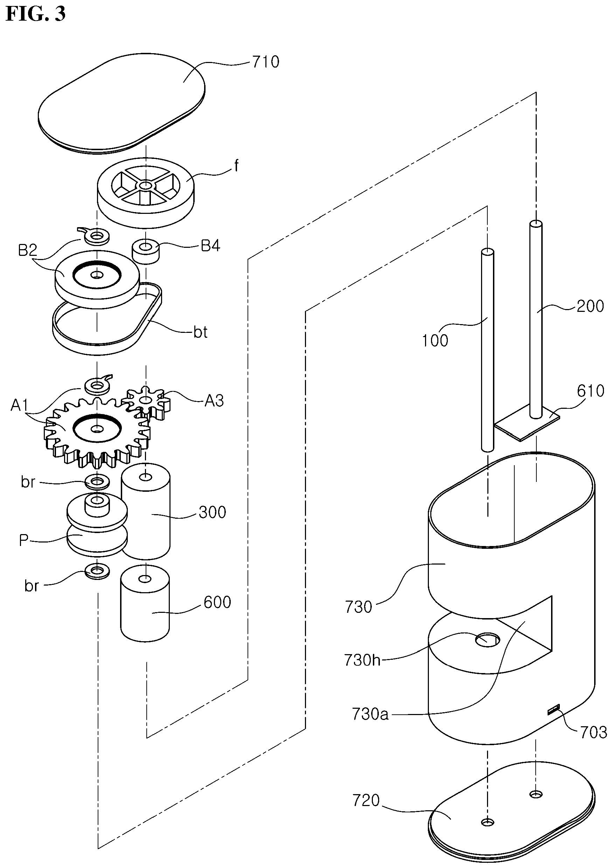

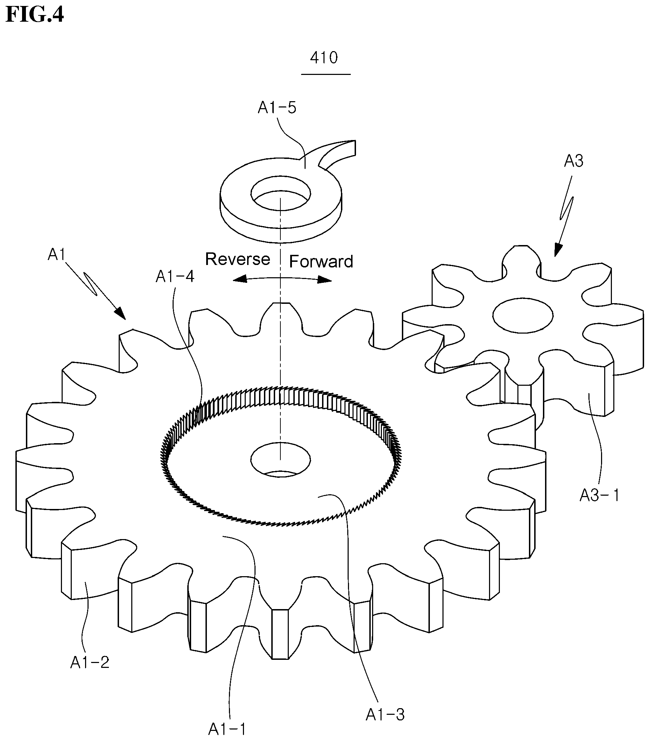

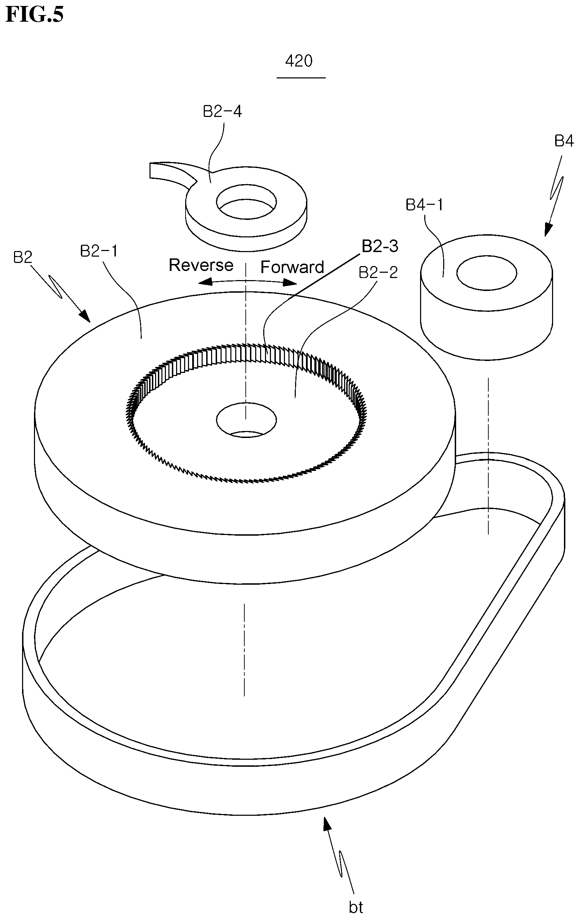

FIG. 1 is a perspective view showing a self-power generating apparatus according to one embodiment of the present invention. FIG. 2 is a perspective view showing an inner part of the self-power generating apparatus according to one embodiment of the present invention. FIG. 3 is an exploded perspective view showing the self-power generating apparatus according to one embodiment of the present invention. FIG. 4 is an enlarged perspective view showing a rotation unit of a reverse power transmission unit of the self-power generating apparatus according to one embodiment of the present invention. FIG. 5 is an enlarged perspective view showing a rotation unit of a forward power transmission unit of the self-power generating apparatus according to one embodiment of the present invention.

Hereinafter, the self-power generating apparatus according to one embodiment of the present invention will be described with reference to FIGS. 1 to 5.

The self-power generating apparatus according to the present embodiment includes a driving shaft 100, a power generating shaft 200, a power generator 300, a power transmission unit 400, a rechargeable battery 600, and a housing 700 as shown in FIGS. 1 to 5.

First, hereinafter, the driving shaft 100 will be described.

The driving shaft 100 is a shaft that transmits a driving force to the power generating shaft 200 to generate electricity, and is alternately rotated in a forward or reverse direction by an external force applied thereto by a user

In detail, as show in FIG. 2, a pulley P is fixedly shaft-coupled to the center of the driving shaft 100, and a wire W is wound around the pulley P.

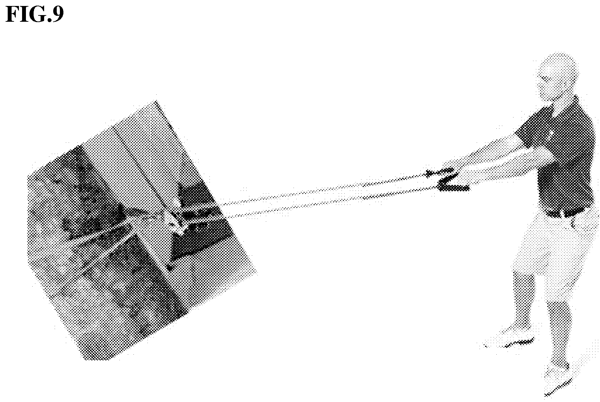

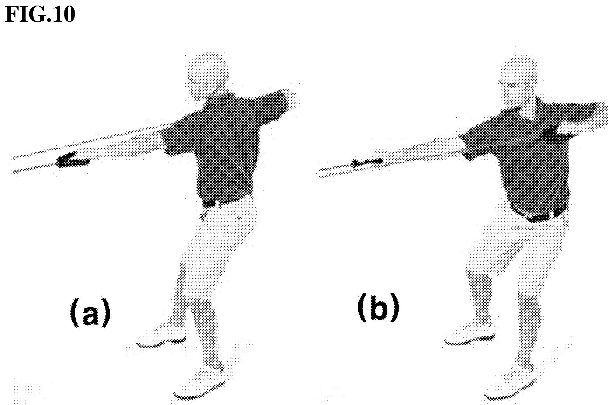

As shown in FIGS. 9 and 10, the user pulls both ends of the wire W to keep the wire W tightening. In this state, the user pulls one end of the wire W to rotate the pulley P in the forward direction, and then pulls the other end of the wire W to rotate the pulley P in the reverse direction. As described above, as the pulley P is alternately rotated in the forward or reverse direction, the driving shaft 100 is alternately rotated in the forward or reverse direction.

Meanwhile, a groove of the pulley P making contact with the wire W may be subject to surface treatment through sandblast or may be formed therein with protrusions to increase a frictional force.

Next, the power generating shaft 200 and the power generator 300 will be described below.

The power generating shaft 200 is a shaft that is rotated only in one direction by receiving an alternating rotational force of the driving shaft 100 through the power transmission unit 400. The driving shaft 100 and the power generating shaft 200 are arranged in parallel to each other, and the power transmission unit 400 converts the alternating rotational force of the driving shaft 100 into a one-direction rotational force to be transmitted to the power generating shaft 200. The power transmission unit 400 will be described later.

The power generator 300 is provided to generate power using the one-direction rotational force of the power generating shaft 200. The power generator 300 may include a gearbox generator. To this end, a geared motor may be provided to be reversely operated.

In other words, the shaft of the geared motor is rotated by the one-direction rotational force of the power generating shaft 200 to generate electricity.

Since the geared motor includes a reduction gear, when the geared motor is used for the power generator 300, the geared motor may rotate the power generating shaft 200 more rapidly than the force of the user, so that power can be generated.

For example, in the case of a 24 V-250 W geared motor (reduction gear ratio of 9.778:1), if the rotation speed of the power generating shaft 200 becomes 230 RPM, the 14 V- 1.5 A electricity is generated. If the rotation speed of the power generating shaft 200 becomes 450 RPM, 28 V-2 A electricity is generated.

In addition, in the case of a 24 V-350 W geared motor (reduction gear ratio of 9.778:1), if the rotation speed of the power generating shaft 200 becomes 230 RPM, the 14 V-2 A electricity is generated. If the rotation speed of the power generating shaft 200 becomes 450 RPM, 28 V-4 A electricity is generated.

Further, in the case of a 36 V-350 W geared motor (reduction gear ratio of 9.778:1), if the rotation speed of the power generating shaft 200 becomes 150 RPM, the 14 V-2 A electricity is generated. If the rotation speed of the power generating shaft 200 becomes 300 RPM, 28 V-4 A electricity is generated.

As described above, the geared motor may generate electricity using the one-direction rotational force of the power generating shaft 200.

Meanwhile, the rechargeable battery 600 may be provided to store electrical energy generated from the power generator 300.

The rechargeable battery 600 may store the electrical energy generated from the power generator 300 and supply the electrical energy at the time point at which a user needs the electrical energy. For example, the rechargeable battery 600 may include a secondary cell.

Hereinafter, the power transmission unit 400 will be described.

The power transmission unit 400 converts the alternating rotational force of the driving shaft 100 into the one-direction rotational force to be transmitted to the power generating shaft 200, and includes a forward power transmission unit 410 and a reverse power transmission unit 420.

The forward power transmission unit 410 transmits only forward rotational force of the driving shaft 100 to the power generating shaft 200, and the reverse power transmission unit 420 transmits only reverse rotational force of the driving shaft 100 to the power generating shaft 200.

As shown in FIG. 4, the forward power transmission unit 410 includes a clutch driving part A1 to transmit only forward power of the driving shaft 100 and a driven part A3 to transmit the power of the clutch driving part A1 to the power generating shaft 200.

The clutch driving part A1 includes a first disc-shaped body A1-1 into which the driving shaft 100 is inserted so that the first disc-shaped body A1-1 is rotatable relatively to the driving shaft 100, a first spur gear A1-2 formed on the outer circumferential surface of the first disc-shaped body A1-1, a first circular step difference groove A1-3 coaxially formed in one surface of the first disc-shaped body A1-1, a first latch gear A1-4 formed in one direction on an inner circumferential surface of the first circular step difference groove A1-3 to transmit only forward rotation movement, and a first latch A1-5 engaged with the first latch gear A1-4 and coupled to the shaft inserted into the first disc-shaped body A1-1.

The driven part A3 includes a second spur gear A3-1 shaft-coupled to the power generating shaft 200 and engaged with the first spur gear A1-2.

Accordingly, when the driving shaft 100 is rotated in the forward direction, the first latch A1-5 becomes engaged with the first latch gear A1-4, so that the first spur gear A1-2 of the first disc-shaped body A1-1 is rotated in the forward direction, and a second disc-shaped body A3-1 is rotated in the reverse direction by the second spur gear A3-1 engaged with the first spur gear A1-2, so that the power generating shaft 200 is rotated in the reverse direction.

The reverse power transmission unit 420 includes a clutch driving part B2 to transmit only reverse power of the driving shaft 100 and a driven part B4 to transmit the power of the clutch driving part B2 to the power generating shaft 200 through a belt bt.

As shown in FIG. 5, the clutch driving part B2 includes a third disc-shaped body B2-1 into which the driving shaft 100 is inserted so that the third disc-shaped body B2-1 is rotatable relatively to the driving shaft 100, a third circular step difference groove B2-2 coaxially formed in one surface of the third disc-shaped body B2-1, a third latch gear B2-3 formed in one direction on an inner circumferential surface of the third circular step difference groove B2-2 to transmit only reverse rotation movement, and a third latch B2-4 coupled to the shaft inserted into the third disc-shaped body B2-1 so that the third latch B2-4 is engaged with the third latch gear B2-3.

The driven part B4 includes a fourth disc-shaped body B4-1 coupled to the power generating shaft 200 and linked with the third disc-shaped body B2-1 through the belt bt.

Accordingly, when the driving shaft 100 is rotated in the reverse direction, the third latch B2-4 becomes engaged with the third latch gear B2-3, so that the third disc-shaped body B2-1 is rotated in the reverse direction. Therefore, the belt bt is rotated in the reverse direction. As the belt bt is rotated in the reverse direction, the fourth disc-shaped body B4-1 is rotated in the reverse direction.

As described above, when the driving shaft 100 is rotated in the forward direction, the power generating shaft 200 is rotated in the reverse direction by the forward power transmission unit 410. When the driving shaft 100 is rotated in the reverse direction, the power generating shaft 200 is rotated in the reverse direction by the reverse power transmission unit 420. In this case, the power generating shaft 200 is continuously rotated in one direction (reverse direction).

The forward power transmission unit 410 and the reverse power transmission unit 420 include a one-way clutch or a one-way bearing that transmits power only in one direction, and do not transmit the power in an opposite direction. Although the forward power transmission unit 410 transmits power by the first spur gear A1-2 and the second spur gear A3-1, and the reverse power transmission unit 420 transmits power through the belt bt as configured above for the illustrative purpose, various one-way clutches or various one-way bearings are applicable for the forward power transmission unit 410 and the reverse power transmission unit 420.

In other words, if the first latch gear A1-4 and the first latch A1-5 are formed to transmit only the forward rotation force of the driving shaft 100 to the power generating shaft 200, the first latch gear A1-4 and the first latch A1-5 are applicable for the forward power transmission unit 410. If the first latch gear A1-4 and the first latch A1-5 are formed to transmit only the reverse rotation force of the driving shaft 100 to the power generating shaft 200, the first latch gear A1-4 and the first latch A1-5 are applicable for the reverse power transmission unit 420. To this end, various types of one-way clutches or one-way bearings are applicable.

Meanwhile, at least one flywheel f may be coupled to the power generating shaft 200. The flywheel f may more effectively generate power by an inertia force.

Hereinafter, the housing 700 will be described.

The housing 700 rotatably supports both ends of the driving shaft 100 and both ends of the power generating shaft 200, and is provided therein with the driving shaft 100, the power generating shaft 200, the power transmission unit 400, the power generator 300, and the rechargeable battery 600.

In detail, the housing 700 rotatably supports both ends of the driving shaft 100 and both ends of the power generating shaft 200 and is provided therein with the power generator 300. The pulley P is exposed to the outside of the housing 700 so that the wire W is wound around the pulley P.

In detail, the housing 700 includes upper and lower plates 710 and 720 mounted in parallel to each other in order to rotatably support both ends of the driving shaft 100 and both ends of the power generating shaft 200, and a main body 730 which connects the upper plate 710 with the lower plate 720 to close housing, and has an exposed part 730a formed at the center of one side thereof to expose the pulley P to the outside.

The upper and lower plates 710 and 720 are mounted on both ends of the main body 730 in parallel to each other in order to rotatably support both ends of the driving shaft 100 and both ends of the power generating shaft 200.

The main body 730 connects the upper plate 710 with the lower plate 720 to close the housing and to form a space in which the driving shaft 100, the power generating shaft 200, the power transmission unit 400, the power generator 300, and the rechargeable battery 600 are received.

Accordingly, the user may wind the wire W around the pulley P exposed to the outside to generate power.

Meanwhile, the exposed part 730a is formed in a groove shape at one side of the main body 730 so that the pulley P fixedly coupled to the driving shaft 100 may be exposed, and a tow ring 701 is provided at one point of the main body 730.

Meanwhile, bearings br may be assembled with holes 730h formed in top and bottom surfaces of the exposed part 730a of the main body 730 to rotatably support the driving shaft 100.

Hereinafter, the example that the self-power generating apparatus having the above configuration is used will be described.

First, the self-power generating apparatus is fixedly hanged on a fixed article, such as a tree, using the tow ring 701 provided at one point of the main body 730 of the housing 700. In this case, in order to fixedly hang the self-power generating apparatus, the tow ring 701 is hanged in the state a string is wound around the tree as shown in FIG. 9.

Next, as shown in FIG. 10(a), as the user pulls the wire W with a right hand to rotate the pulley P in the forward direction, the driving shaft 100 is rotated in the forward direction. As the driving shaft 100 is rotated in the forward direction, the forward power transmission unit 410 of the power transmission unit 400 transmits only the forward rotational force to the power generating shaft 200.

Next, as shown in FIG. 10(b), as the user pulls the wire W with a left hand to rotate the pulley P in the reverse direction, the driving shaft 100 is rotated in the reverse direction. As the driving shaft 100 is rotated in the reverse direction, the reverse power transmission unit 420 of the power transmission unit 400 transmits only the reverse rotational force to the power generating shaft 200.

In other words, in all of two cases that the user pulls the wire W with the right hand or pulls the wire W with the left hand, the power generating shaft 200 may be continuously rotated in the reverse direction, and power may be generated by the one-direction rotational force of the power generating shaft 200.

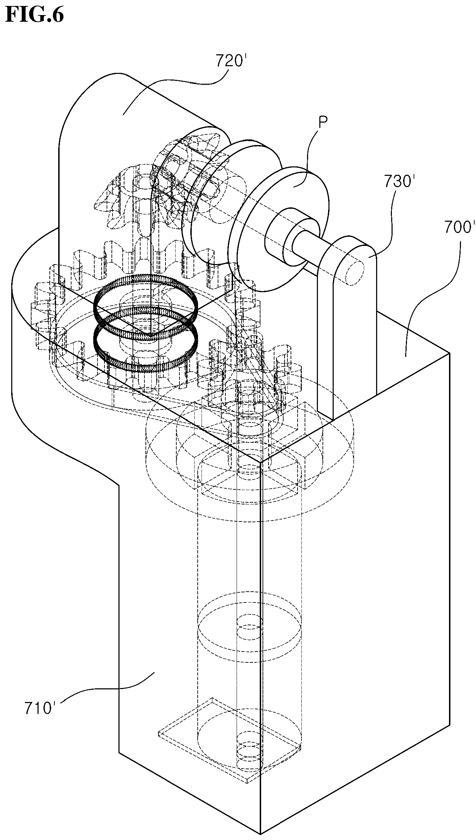

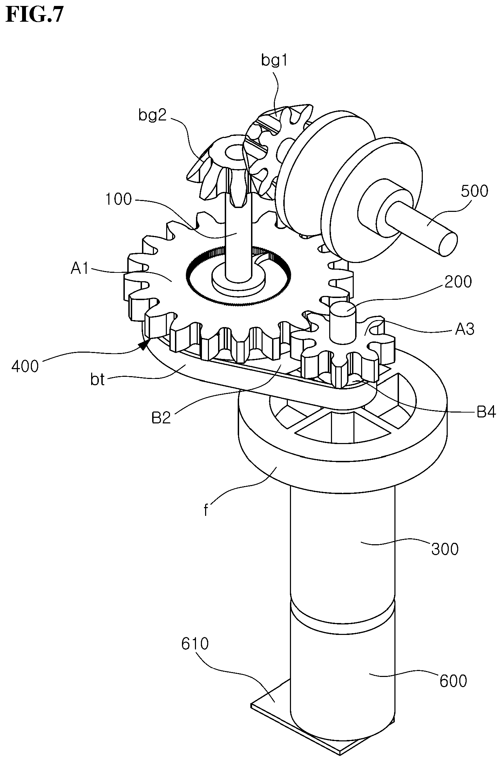

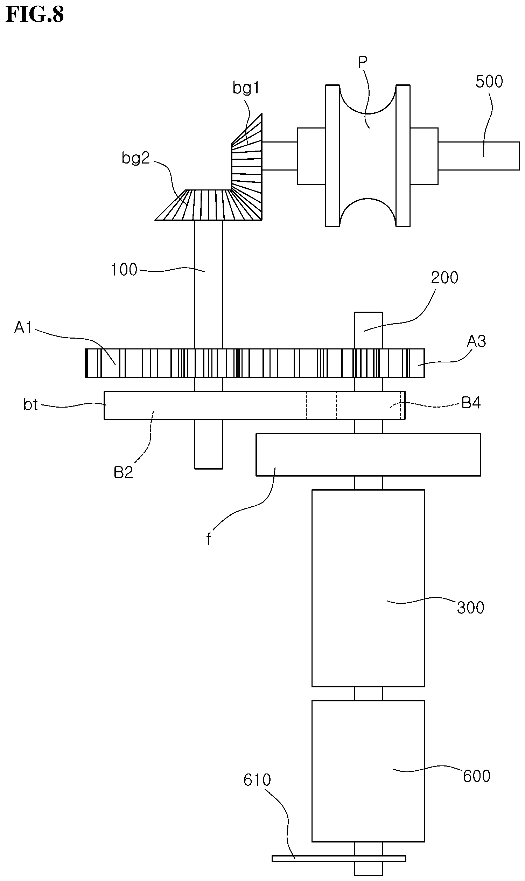

FIG. 6 is a perspective view showing a self-power generating apparatus according to another embodiment of the present invention. FIG. 7 is a perspective view showing an inner part of the self-power generating apparatus according to another embodiment of the present invention. FIG. 8 is a plan view showing the inner part of the self-power generating apparatus according to another embodiment of the present invention.

Hereinafter, a self-power generating apparatus according to another embodiment of the present invention will be described with reference to FIGS. 6 to 8.

As shown in FIGS. 6 to 8, the self-power generating apparatus according to the present embodiment includes a driving shaft 100, a power generating shaft 200, a power generator 300, a power transmission unit 400, a cooperation shaft 500, a rechargeable battery 600, and a housing 700.

Meanwhile, since the power generating shaft 200, the power generator 300, the power transmission unit 400, and the rechargeable battery 600 have configurations the same as or similar to those of the previous embodiment, the details thereof will be omitted. The following description will be made while focusing on the cooperation relationship between the driving shaft 100 and the cooperation shaft 500 and the housing 700.

The self-power generating apparatus according to the present embodiment further includes the cooperation shaft 500. As shown in FIG. 7, a first bevel gear bg1 is coupled to one end of the cooperation shaft 500, and a pulley P is coupled to the central portion of the cooperation shaft 500.

Meanwhile, a second bevel gear bg2 engaged with the first bevel gear bg1 is coupled to one end of the driving shaft 100.

Accordingly, as the wire W wound around the pulley P of the cooperation shaft 500 alternately reciprocates, the cooperation shaft 500 is alternately rotated in forward and reverse directions, so that the driving shaft 100 may be alternately rotated in the forward and reverse directions.

Meanwhile, the alternating rotational force of the driving shaft 100 in the forward and reverse directions is converted into a one-direction rotational force to be transmitted to the power generating shaft 200 through the power transmission unit 400. Electricity may be generated from the power generator 300 by the one-direction rotational force of the power generating shaft 200. The electricity generated from the power generator 300 may be stored in the rechargeable battery 600.

The housing 700' rotatably supports both ends of the driving shaft 100, both ends of the power generating shaft 200, and both ends of the cooperation shaft 500, and is provided therein with the power transmission unit 400, the power generator 300, and the rechargeable battery 600. The pulley P is exposed from the housing 700' so that the wire W may be wound around the pulley P.

In detail, the housing 700' includes a base body 710' provided therein with the power transmission unit 400, the power generator 300, and the rechargeable battery 600 and having a substantially clockwise direction-half turned "L" shape, an axillary body 720' extending from one side of a top surface of the base body 710' to receive one end of the driving shaft 100 and one end of the cooperation shaft 500, and a support flange 730' extending from the opposite side of the top surface of the base body 710' to rotatably support the opposite end of the cooperation shaft 500.

Hereinafter, the example that the self-power generating apparatus having the above configuration is used will be described.

First, the self-power generating apparatus is fixedly hanged on a fixed article, such as a tree, using the tow ring 701 provided at one point of the main body 730 of the housing 700. In this case, in order to fixedly hang the self-power generating apparatus, the tow ring 701 is hanged in the state a string is wound around the tree as shown in FIG. 9.

Next, as shown in FIG. 10(a), as the user pulls the wire W with a right hand to rotate the pulley P in the forward direction, the cooperation shaft 500 is rotated in the forward direction, so that the driving shaft 100 is rotated in the forward direction. As the driving shaft 100 is rotated in the forward direction, the forward power transmission unit 410 of the power transmission unit 400 transmits only the forward rotational force to the power generating shaft 200.

Next, as shown in FIG. 10(b), as the user pulls the wire W with a left hand to rotate the pulley P in the reverse direction, the cooperation shaft 500 is rotated in the reverse direction, so that the driving shaft 100 is rotated in the reverse direction. As the driving shaft 100 is rotated in the reverse direction, the reverse power transmission unit 420 of the power transmission unit 400 transmits only the reverse rotational force to the power generating shaft 200.

In other words, in all of two cases that the user pulls the wire W with the right hand or pulls the wire W with the left hand, the power generating shaft 200 may be continuously rotated in the reverse direction, and power may be generated by the one-direction rotational force of the power generating shaft 200.

Meanwhile, the self-power generating apparatus according to one embodiment of the present invention is applicable for various types of workouts to generate power while allowing the user to work out.

Although the exemplary embodiments of the present invention have been described, it is understood that the present invention should not be limited to these exemplary embodiments but various changes and modifications can be made by one ordinary skilled in the art within the spirit and scope of the present invention as hereinafter claimed.

## Claims

1. A self-power generating apparatus comprising:
a driving shaft alternately rotated in a forward direction or a reverse direction by an external force;
a forward power transmission unit to transmit only a forward rotational force of the driving shaft to a power generating shaft;
a reverse power transmission unit to transmit only a reverse rotation force of the driving shaft to the power generating shaft; and
a power generator to generate power using a one-direction rotational force of the power generating shaft.

2. The self-power generating apparatus of claim 1, wherein a pulley is coupled to the driving shaft, and the driving shaft is alternately rotated in the forward direction or the reverse direction as a wire wound around the pulley of the driving shaft alternately reciprocates.

3. The self-power generating apparatus of claim 2, wherein the pulley is coupled to a center of the driving shaft.

4. The self-power generating apparatus of claim 1, further comprising a cooperation shaft that is mounted perpendicularly to the driving shaft, has one end coupled to a first bevel gear, and is coupled to a pulley,
wherein a second bevel gear engaged with the first bevel gear is coupled to one end of the driving shaft, and
the cooperation shaft is alternately rotated in the forward direction or the reverse direction as a wire wound around the pulley of the cooperation shaft alternately reciprocates, such that the driving shaft is alternately rotated in the forward direction or the reverse direction.

5. The self-power generating apparatus of one of claims 1 to 4, wherein one or both of the forward power transmission unit and the reverse power transmission unit include:
a clutch driving part to transmit only one-direction power of the driving shaft; and
a driven part to transmit power of the clutch driving part to the power generating shaft,
wherein the clutch driving part includes:
a first disc-shaped body, into which one of the driving shaft and the power generating shaft is inserted, such that the first disc-shaped body is rotatable relatively to the inserted shaft;
a first spur gear formed on an outer circumferential surface of the first disc-shaped body;
a first circular step difference groove coaxially formed in one surface of the first disc-shaped body;
a first latch gear formed in one direction on an inner circumferential surface of the first circular step difference groove to transmit only one-direction rotation movement; and
a first latch coupled to the inserted shaft into the first disc-shaped body to be engaged with the first latch gear, and
wherein the driven part includes a second spur gear coupled to a remaining one of the driving shaft and the power generating shaft and engaged with the first spur gear,
the first latch gear and the first latch are formed to transmit a driving force only in the forward direction when applied to the forward power transmission unit, and
the first latch gear and the first latch are formed to transmit the driving force only in the reverse direction when applied to the reverse power transmission unit.

6. The self-power generating apparatus of claim 1, wherein one or both of the forward power transmission unit and the reverse power transmission unit include:
a clutch driving part to transmit only one-direction power of the driving shaft; and
a driven part to transmit power of the clutch driving part to the power generating shaft through a belt,
wherein the clutch driving part includes:
a third disc-shaped body, into which one of the driving shaft and the power generating shaft is inserted, such that the third disc-shaped body is rotatable relatively to the inserted shaft;
a third circular step difference groove coaxially formed in one surface of the third disc-shaped body;
a third latch gear formed on an inner circumferential surface of the third circular step difference groove; and
a third latch coupled to the inserted shaft into the third disc-shaped body to be engaged with the third latch gear,
wherein the driven part includes a fourth disc-shaped body coupled to a remaining one of the driving shaft and the power generating shaft and linked with the third disc-shaped body through the belt, and
wherein the third latch gear and the third latch are formed to transmit a driving force only in the forward direction when applied to the forward power transmission unit, and
the third latch gear and the third latch are formed to transmit the driving force only in the reverse direction when applied to the reverse power transmission unit.

7. The self-power generating apparatus of claim 1, further comprising at least one flywheel coupled to the power generating shaft.

8. The self-power generating apparatus of claim 1, further comprising a rechargeable battery to store electrical energy generated from the power generator.

9. The self-power generating apparatus of claim 1, further comprising a housing that rotatably supports both ends of the driving shaft and both ends of the power generating shaft and has the power generator therein.

10. The self-power generating apparatus of claim 9, wherein a pulley is coupled to the driving shaft, and the driving shaft and the power generating shaft are arranged in parallel to each other.
